Europäisches Patentamt

European Patent Office (11) Publication number: **0 307 649**

Office européen des brevets

A2

(12) **EUROPEAN PATENT APPLICATION**

(21) Application number: 88113497.7

(51) Int. Cl.⁴: **G06F 12/06**

(22) Date of filing: 19.08.88

(30) Priority: 19.08.87 US 87092

(43) Date of publication of application:
22.03.89 Bulletin 89/12

(84) Designated Contracting States:
AT BE CH DE ES FR GB GR IT LI LU NL SE

(71) Applicant: Compaq Computer Corporation
20555 FM 149
Houston Texas 77070(US)

(72) Inventor: McGraw, Montgomery C.
8207 Colonial Oaks Lane
Spring, Texas 77379(US)
Inventor: Perez, Lazaro D.
14918 Carols Way
Houston, Texas 77070(US)
Inventor: Thayer, John S.
6927 Falling Waters
Spring, Texas 77379(US)
Inventor: Bryant, Raymond J.
13210 Prestonwood Forest no.141
Houston, Texas 77070(US)

(74) Representative: Geissler, Bernhard, Dr. jur.,
Dipl.-Phys. Patent- und Rechtsanwälte et al
Bardehle-Pagenberg-Dost-
Altenburg-Frohwitter-Geissler & Partner
Postfach 86 06 20
D-8000 München 86(DE)

(54) **Data processing system for utilizing a memory-mapped coprocessor within a limited address space.**

(57) A data processing system is disclosed which permits the use of a memory mapped floating point coprocessor or other such peripheral, by a process which is unable to address the peripheral's resident memory location but which is able to address a specified location. Memory mapping means intercept attempted accesses by the process to the specified location and diverts the process's access instruction to cause it to access the corresponding mapped address instead. An illustrative implementation is also described, namely the use of a Weitek 1167 memory-mapped, floating point coprocessor by processes running in the "virtual mode" of an Intel 80386 CPU.

Fig. 1

# DATA PROCESSING SYSTEM FOR UTILIZING A MEMORY-MAPPED COPROCESSOR WITHIN A LIMITED ADDRESS SPACE

This invention relates to the use, by programs being executed by the computer ("tasks" or "processes") which are incapable of addressing a specified memory range, of a floating point coprocessor or other peripheral device residing at the specified memory range. The invention particularly relates to such use by processes running under the well-known MS-DOS operating system and its segmentation scheme for addressing memory. (MS-DOS is a trademark of Microsoft Corporation of Bellevue, Washington.)

The background of the invention is illustrated by reference to an Intel 80386 ("386") microprocessor ("CPU"). The 386 CPU is described in publications by and available from Intel Corporation, Santa Clara, California, including the "Intel 80386 Hardware Reference Manual," Order No. 231732-1, the "Intel 80386 Programmer's Reference Manual," Order No. 230985-1, and the "Intel 80386 System Software Writer's Guide," Order No. 231499-1, to which reference is hereby made.

As will be appreciated by those of ordinary skill in the art, computers have proliferated in recent years. One popular CPU series is the so-called Intel 86-series microprocessor family, including the 8086, the 8088, the 80286 ("286"), and the aforementioned 386.

Backward compatibility with earlier-model CPUs is frequently an important consideration in CPU design, especially when a large installed base of earlier-model CPUs exists. In the Intel 86-series family, compatibility has required the later-model CPUs to be able to deal with the segmentation scheme for addressing memory locations used in the 8086 and 8088 architecture. That scheme formed a significant part of the design philosophy of MS-DOS and limits the memory-addressing capability of processes running under MS-DOS.

As those of ordinary skill will know, in that segmentation scheme, the address of any given memory location is expressed in two parts, the segment address and the offset within the specified segment. In the 8086/8088 architecture, the segment address can be up to four hex digits, ranging from 0000h to FFFFh. The microprocessor obtains the actual or absolute address by shifting the segment address leftward by one nibble (i.e., one hex digit or four bits, equivalent to multiplying by 16) and adding the offset address.

The resulting 20-bit number is large enough to specify up to a one-megabyte address, which is the address range of the 8088 and 8086 microprocessors (because those CPUs have 20 address lines). An address of FFFFFh, i.e., one less than 100000h, can be expressed in segmented notation as FFFF:000F. The segment portion, FFFFh, is shifted left one position (multiplied by 16) to yield FFFF0h, to which the offset 000Fh is added to yield the absolute address FFFFFh.

The MS-DOS operating system was to a great extent tailored to the 8088/8086 CPUs' addressing scheme. The present commercially available versions of MS-DOS express addresses in the segmented scheme just described.

Applications programs running under MS-DOS can run on the 386 in the 386's "real" mode. In real mode, the 386 behaves largely as if it were an 8086 or 8088 running at the 386's relatively high clock speed.

Such use of the real mode by an applications program, however, means that the 386's hardware resources may not be optimally utilized. For example, a Weitek 1167 floating point co-processor (Weitek Corporation, Sunnyvale, California) is designed to reside at physical base address C0000000h in the 386 architecture, and to be mapped into 64K of memory at addresses C0000000h through C000FFFFh.

Instructions and pointers to operands are passed back and forth between the 386 and the Weitek 1167 coprocessor along the 386 address lines: for example, a MOV instruction generated by the 386 which specifies a 32-bit address in the Weitek 1167's mapped range causes the Weitek 1167 to parse the address, to decode it into its component instructions and pointers to operands in accordance with a predetermined protocol, and to execute the instructions using the specified operands. Reference is made to the "Weitek 1167 Floating Point Coprocessor" dated July, 1987, published by Weitek Corporation.

Programs which utilize the conventional MS-DOS real mode segmented address scheme cannot make use of such a coprocessor because that address scheme prevents them from generating the required addresses. Such a coprocessor could conceivably be mapped into one or another subrange of the one-megabyte range so that it would be usable by real- mode programs. However, most real-mode MS-DOS programs are designed to expect other components (e.g., video memory, ROM-BIOS, free memory, etc.) at specified subranges within the one-megabyte range in accordance with the industry standard. Consequently, real-mode software which could use such a coprocessor when mapped into the one-megabyte range might prove unable to run on industry-standard computers which had other components within the mapped subrange.

In accordance with the present invention, a data processing system is provided which permits the use of a memory mapped floating point coprocessor or other such peripheral, by a process which is unable to address the coprocessor's memory location but which is, on the other hand, able to address a specified location. Memory mapping means intercept attempted accesses by the process to the specified location and diverts the process's access instruction to cause it to access the corresponding mapped address instead.

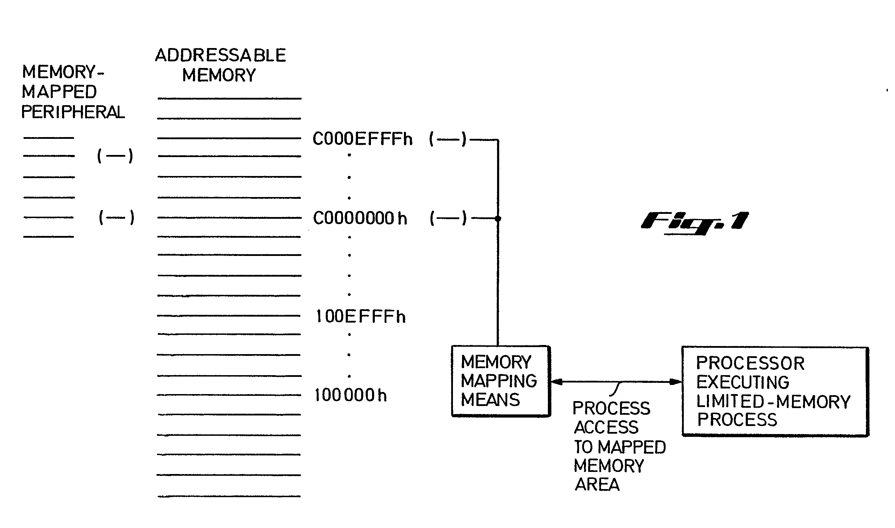

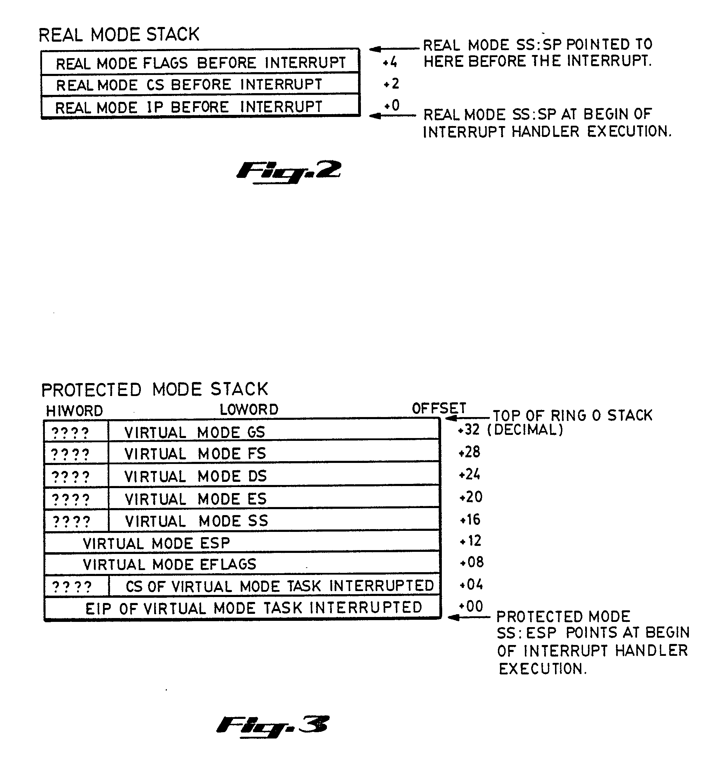

Figure 1 is a pictorial representation of a mapping scheme for a Weitek 1167 coprocessor in accordance with the present invention. Figures 2, 3, and 4 are representations of memory allocations relating to an illustrative implementation of the invention.

The invention described herein relates to an arbitrary large-memory computer running a restricted- and segmented-memory program as a process. For example, the invention is believed to be capable of implementation by those of ordinary skill on computers based on, e.g., the well-known Motorola 68020 CPU or the aforementioned Intel 80386 CPU.

The invention will frequently be implemented through the use of a memory management unit (MMU) computer program, a type of program which will be familiar to those of ordi nary skill, to map the coprocessor's resident address in physical memory, inaccessible by the process, into a specified portion of the address range accessible by the process. Attempts by the process to write to or read from the specified address range are thus directed to the coprocessor's resident address in physical memory instead, enabling the coprocessor to respond to the process.

Those of ordinary skill having the benefit of this disclosure will appreciate that the basic function of the MMU in this context is to intercept any read or write instruction generated by the process that is directed to an address within the specified range, prior to the transmission of the address on the computer's address bus, and to cause the transmission instead of a mapped address corresponding to the address range of the coprocessor or other peripheral instead.

Preferred implementation techniques for particular embodiments will of course vary with the type of CPU, operating system, MMU, and other factors familiar to those of ordinary skill. Many implementations of the invention will be directed to permitting MS-DOS processes, running in the conventional one megabytes of logical address space, to utilize a floating point coprocessor residing in physical memory outside that logical address space.

For example, the aforementioned Weitek 1167 floating point coprocessor resides in 64K beginning at physical memory locations C0000000, as noted above, which is outside the addressing capability of a conventional MS-DOS program. In implementations directed to that coprocessor, it is preferred that the coprocessor be mapped into 60K of logical memory beginning at address 100000h. As will be appreciated by those of ordinary skill having the benefit of this disclosure, MS-DOS processes can address that range using a base segment of FFFFh, while still leaving almost 4K (less 10h bytes) of such MS-DOS addressable space for other uses. The loss of 4K of addressable space to the Weitek coprocessor is not believed appreciably to impair the coprocessor's operation. It is believed that few MS-DOS programs make use of the memory range above the one-megabyte upper memory limit of the 8088 and 8086 CPUs; thus, implementation of the invention at this address should not have an adverse effect on the operation of many such programs.

It will be apparent to those of ordinary skill having the benefit of this disclosure that in such implementations, the MMU must be designed so that attempts by the MS-DOS process to address memory ranges above the one-megabyte limit are not "wrapped around" into low memory. The highest address that can be specified in 20 bits (five hex digits) is the aforementioned FFFFFh address. Consequently, use of an offset of greater than 000Fh with an FFFFh segment results in an absolute address exceeding this range. For example, an offset of 0010h, when added to an FFFFh segment that has been left-shifted, results in 100000h. The 8088 and 8086 CPUs ignore all but the low 20 bits (because they have only 20 address lines), meaning that an address of, e.g., FFFF:0011 is treated by those CPUs as an address of 0000:0001. While some MS-DOS programs deliberately utilize that characteristic of those CPUs, the MMU must be designed not to emulate it.

On the 386, the invention may be implemented in connection with the Weitek 1167 coprocessor using an MMU running in the 386's "virtual 86" mode to manage the 386's paging feature (see the Intel Hardware Reference Manual, above).

As noted above, the MMU should be capable of mapping 60K bytes of extended memory at which the Weitek coproces sor resides into a logical address space beginning at 100000h. A functional outline of one exemplar type of MMU (referred to here as XMMU) is described here for purposes of illustration. In this context, the chief function of the XMMU is to manage hardware and software interrupts, instruction emulation, and general system error handling. The XMMU is similar in functionality to the kernel of a simple operating system. The XMMU may also be designed to emulate the architectural features of a computer which is compatible with the "industry standard" 80286 computer architecture, as reflected, for example, in the COMPAQ DESKPRO 286.

The XMMU may employ a technique referred to herein as "interrupt reflection" to simulate the action of a real-mode software or hardware interrupt for a task which is running in the virtual mode of the 386 CPU. Interrupt reflection causes the result of a hardware or software interrupt, generated in connection with a virtual-mode task, to be the same as with a real-mode task. Reference is made to the Intel publications cited above.

Through interrupt reflection, virtual-mode tasks can be made to operate substantially identically to real mode. This permits the proper operation of the system ROM interrupt handlers, of real-mode operating system interrupt handlers (e.g., those associated with MS-DOS), and real-mode applications which trap interrupts.

On the 386 CPU, hardware interrupt reflection exemplifies the general technique of interrupt reflection. Therefore, a description of a hardware interrupt reflection technique is provided here. An XMMU software interrupt reflection technique differs slightly from its hardware interrupt reflection and will be described hereafter. .

In understanding interrupt reflection, it is useful to examine the difference between the effects of interrupts in virtual mode and in real mode. In real mode on the 386 CPU, for example, a hardware interrupt number 8 proceeds as follows. The processor suspends execution of the currently executing task at the address specified by the current contents of the code segment (CS) register and the instruction pointer (IP) register. The processor pushes the current contents of the flags register, the CS, and the IP register onto the current stack, as defined by the current stack segment (SS) and stack pointer (SP) registers. These values are pushed onto the stack in the order just described, as illustrated in Fig. 2.

The 386 CPU then determines the beginning execution address for the interrupt number 8 interrupt handler routine via the interrupt 8 vector located in low memory at address 0000h:0020h (20h = 4 * 8). Finally, the processor clears the interrupt flag (IF) and trace flag (TF) bits in the current flags register and continues execution at the beginning address of the interrupt 8 interrupt handler. In short, the processor in real mode saves the current flags and the CS and IP registers on the stack and dispatches the interrupt 8 handler with the IF and TF bits cleared. The processor remains in real mode throughout this process.

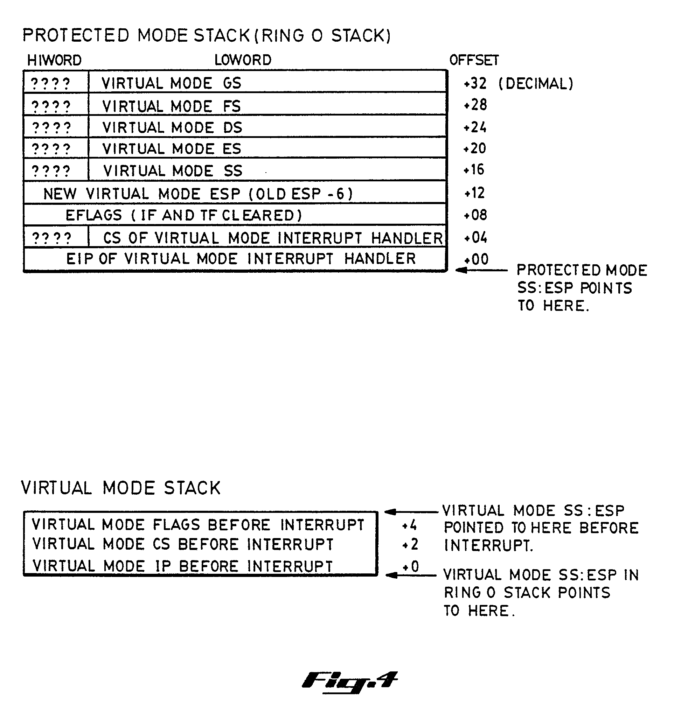

Interrupts are handled somewhat differently in virtual mode. To continue with the 386 hardware interrupt example, such interrupts proceed similarly in that they save the current flags and the CS and IP registers on the stack and dispatch the interrupt handler with the IF and TF bits cleared. In virtual mode, however, the interrupt handler executes at Ring 0 of protected mode and the stack on which the flags and the CS and IP registers are saved is a special Ring 0 stack which is not determined by the SS:SP register combination of the virtual mode task. This stack is illustrated in Fig. 3.

Furthermore, the beginning address of the interrupt handler is not determined by reference to the interrupt vector located at 0000:(int number * 4), but instead by an entry in the system's Interrupt Descriptor Table (IDT). The IDT contains an entry for each valid interrupt in the system.

The IDT entries for valid interrupts point to the XMMU'S code for handling interrupts. Additionally, more virtual-mode task information than just flags, CS, and IP is placed on the ring 0 stack when the interrupt occurs. The virtual mode stack, as determined by the virtual mode task's SS:SP at interrupt time, is not altered.

Interrupt reflection entails manipulation of the ring-0 and virtual-mode stacks to cause results like a real mode interrupt action for the virtual task. The desired end result is virtual-mode execution of the interrupt handler determined by the interrupt vector at 0000h:(4 * interrupt number), using the same stack contents and entry flags as would have existed if the interrupt had occurred in real mode.

To achieve this on a 386 CPU, for example, the XMMU's interrupt reflection portions may follow the following steps within the protected mode interrupt handler (i.e., within the interrupt reflector).

Step 1: The virtual mode stack segment (SS) and stack pointer (ESP) reside in the ring 0 stack. Decrement the virtual mode ESP value in the ring 0 stack by 6 (3 words).

Step 2: Construct a protected mode address (pointer) to this new virtual mode stack address (SS:ESP in the ring 0 stack). This address pointer for the modified SS:ESP is referred to herein as the VSP.

Step 3: Take the low word of the EFLAGS from the ring 0 stack and place it in the virtual mode stack at VSP + 4.

Step 4: Take the CS word from the ring 0 stack and place it in the virtual mode stack at VSP + 2.

Step 5: Take the low word of IP from the ring 0 stack and place it in the virtual mode stack at VSP + 0.

Step 6: Determine the beginning address for the virtual-mode interrupt handler via the interrupt vector at 0000h:(4*interrupt number).

Step 7: Place the CS for the virtual mode interrupt handler's vector into the ring 0 stack in place of the CS saved for the interrupted virtual-mode task.

Step 8: Place the IP for the virtual mode interrupt handler's vector into the ring 0 stack in place of the low word of EIP saved for the interrupted virtual mode task. Zero the high word of the EIP saved on the ring 0 stack.

Step 9: Clear the IF and TF bits in the EFLAGS in the ring 0 stack.

At this point in the 386 CPU illustration, the XMMU's protected mode interrupt handler executes an IRETD instruction to return to virtual mode and execute the virtual mode interrupt handler. The ring 0 and virtual mode stacks should appear generally as illustrated in Fig. 4 when the IRETD begins execution.

In summary, the 386 implementation of the XMMU'S interrupt reflection logic comprises the following general steps. The processor interrupts a virtual mode task, saves the state of the virtual mode task on the ring 0 stack, and begins execution of the XMMU'S interrupt handler in ring 0 of protected mode. The XMMU'S interrupt handler manipulates the virtual mode stack to simulate the action of a real mode interrupt. The XMMU modifies the ring 0 stack frame to contain the appropriate entry conditions for the virtual mode interrupt handler (the interrupt handler which would have been executed in real mode). Then the XMMU executes an IRETD instruction and the processor returns to virtual mode and executes the virtual mode interrupt handler with the same entry conditions that would have existed in connection with a real mode interrupt.

A slightly different technique may be used for reflecting software interrupts. In the XMMU, most software interrupts can be designed to generate general protection (GP) faults and thus to enter an XMMU protected mode GP fault handler (such as via IDT entry number 0Dh). This is in contrast to the software interrupts entering the XMMU via an interrupt handler described by the appropriate entry in the IDT.

When a software interrupt occurs via a GP fault, the microcode programming of the 386 CPU causes an error code to be inserted at the bottom of the ring 0 stack. To reflect a software interrupt which entered through the GP fault handler, the XMMU may remove the error code from the ring 0 stack, determine the interrupt number to be reflected by decoding the faulting interrupt instruction, and proceed with the same logic used for the hardware interrupts.

To decode the faulting instruction, the XMMU creates a pointer to the faulting instruction on the ring 0 stack via the virtual-mode task's CS:EIP registers. The XMMU decodes the instruction at this virtual-mode address to verify that it is a software interrupt instruction and to determine the interrupt number for this software interrupt.

The XMMU causes most software interrupts to enter the XMMU'S interrupt handling through the GP fault handler because of certain design characteristics of some computers based on the Intel '86 CPU family. The original design of 8088-based MS-DOS systems ignored Intel warnings which reserved certain IDT entries for future use. When the 80286 processor was introduced, Intel had indeed used some of these IDT entries for processor exceptions related to new instructions and to the protected mode. The result was conflicting usage of these IDT entries. For example, software interrupt 5 (INT 5) is used to instruct the ROM BIOS to print the current contents of the display screen. In the 80286 and the 80386, this interrupt number is generated by the processor when the limit arguments in a BOUND instruction are exceeded.

The problem of overlapping software interrupts and CPU exceptions is solved in the XMMU by setting the Descriptor Privilege Level (DPL) of all interrupt gates in the IDT to 0. This causes the INT instruction to generate a GP fault. References to null (all zeroes) IDT entries cause GP faults. This allows unused entries to be filled with zeroes instead of being initialized with a pointer to a default handler. In addition, references to non-existent IDT entries (beyond the limit of the IDT) cause GP faults, so the IDT can be truncated after the last entry actually used. By forcing all software interrupt instructions through the GP fault handler, the IDT entry use conflict between CPU exceptions and software interrupts is removed.

Potential conflicts of IDT usage also exist in the XMMU between hardware interrupts and CPU exceptions. In the COMPAQ Deskpro 286, for example, the interrupt controllers are programmed such that the diskette controller generates an interrupt 14. In the 80386, on the other hand, interrupt 14 is generated by the processor when a Page Fault exception occurs.

The XMMU interrupt handler must be able to differentiate between these two conditions. It may do so by taking advantage of the fact that the microcode programming of the 386 CPU causes an error code to be placed onto the stack when a Page Fault is generated. Since the top of the ring 0 stack is a known value (it is taken from the TSS when the transition from virtual mode to protected mode occurs), checking for the presence of the error code is simply a matter of measuring the depth of the stack. The stack is one word (the error code) deeper when the interrupt has been entered via processor exception than when it has been entered via hardware interrupt. Other processor exception/hardware interrupt conflicts may be handled in the same manner.

The XMMU must handle system errors which occur during virtual-mode execution. Although all system errors encountered by the XMMU will normally be signalled by CPU exceptions, some of these exceptions are not errors at all, some of these errors are handled by the XMMU, and some errors are sent to the appropriate virtual mode error handler. In general, if an exception is generated by execution in protected mode (by the XMMU code), the XMMU displays an XMMU Exception Error and halts the system. If an error is generated by a virtual mode task, the XMMU will cause the CPU exception to be reflected to the corresponding virtual mode exception handler. The two exceptions to this rule are the Invalid Opcode fault and the General Protection fault hand lers in the XMMU. If one of these two faults occurs in a virtual mode task the VMFault routine takes over. VMFault decodes the faulting instruction to differentiate between actual errors and instruction trapping (such as I/O trapping and instruction emulation). The attached pseudocode (Appendix A) describes the error handling logic for the XMMU'S protected mode CPU interrupt/exception handlers.

The VMFault routine dispatches GP and Invalid Opcode faults to specific handlers based on the CPU instruction which caused the fault. I/O instructions go to the I/O trapping logic. Software interrupts go to the software interrupt emulation and reflection logic. The HLT, CLTS, and LOCK instructions are emulated. The LGDT and LIDT instructions generate privileged operation errors which allow the user to choose between rebooting the system and continuing the system in real mode with the XMMU turned off. The MOV r32,CR0, MOV CR0,r32, MOV r32,DRX, and MOV DRX,r32 instructions are emulated. The MOV instructions to/from TRx, CR2, and CR3 generate privileged operation errors. The MOVS instruction is checked for a special case emulation. All other instructions are reflected to the virtual mode invalid opcode interrupt handler.

As part of its instruction decoding the VMFault routine detects and properly handles segment, operand size, and address size overrides. The VMFault routine also detects software interrupts and reflects them to the appropriate virtual mode interrupt handler. The VMFault routine watches for the INT 15h Move Block function described below and calls the XMMU Move Block emulation code when needed.

Those of ordinary skill having the benefit of this disclosure will recognize that an MMU may be designed that includes more functions than those just described. The foregoing description of an illustrative XMMU is intended to outline the general functions of an MMU.

MS-DOS software intended to access the Weitek 1167 should execute appropriate procedures to confirm that a 386 CPU is in use and that the Weitek coprocessor is present. One CPU-identifying procedure is described in a copending U.S. patent application filed August 3, 1987, by William Caldwell Crosswy entitled "Method for Distinguishing Between an Intel 80386 and an Intel 80286 CPU," assigned to the assignee of the present application. On the Compaq Deskpro 386, execution of an INT 11 BIOS call (from the CPU's real mode) will return a 1 in bit 24 of register EAX if the coprocessor is present, and additionally will return a 1 in bit 23 if the coprocessor is addressable by real mode applications (zeros otherwise). The exact procedure used may of course vary with the BIOS interrupt handler and the EAX bit map used in the particular computer design. The MMU should put the 80386 into virtual mode and use memory paging to map logical addresses 100000h through 10EFFFh to physical address space located at C0000000 through C000EFFFh.

MS-DOS processes may then address the Weitek 1167 coprocessor by setting the appropriate segment register (for example, DS) to FFFFh, adding an address offset of 0010h (to access base address 10000h), then executing MOV instructions that generate Weitek 1167 addresses between 10000h and 10EFFFh. The following example illustrates Weitek 1167 instruction encoding for MS-DOS processes operating in virtual mode:

Coprocessor segment = FFFF:0000h
Offset to address 10000h = 0010h
Opcode = ADD.S = 0000h
Source of 1st operand = R1 = 0001h
Source of 2nd operand = R2 = 0008h
Actual address generated (sum of above) = FFFF:0019h

The segmented address, written FFFF:0019h, is equivalent to writing address 100009h. The operands for the example register-to-register Weitek 1167 ADD instruction reside in the coprocessor's registers R1 and R2.

The operand for a coprocessor memory-to-register instruction would be loaded into the MOV instruction source register. Execution of a doubleword MOV instruction transfers the 32-bit operand to a designated 1167 register.

In the Intel 286 and 386 architectures, the Intel coprocessor exception interrupt, generated by the Intel 80287 and 80387 coprocessors, is normally connected to interrupt line IRQ13. Application programs running as MS-DOS processes normally supply an NMI interrupt service routine for any enabled Intel coprocessor exceptions. The service routine typically clears the Intel coprocessor exception (if pending) and chains to the previously existing NMI vector. Unresolved coprocessor exceptions can result in system errors.

The Weitek 1167 coprocesor likewise generates an IRQ13 interrupt when it encounters an enabled exception. Since the IRQ13 interrupt line is normally dedicated to Intel coprocessors, this arrangement minimizes the possibility of interrupt conflicts with other types of hardware, but consequently, however, application programs running as MS-DOS processes using the Weitek coprocessor must distinguish between Weitek and Intel coprocessor exceptions upon the occurrence of an IRQ13 interrupt. This can be done by trapping INT 75h and, upon the occurrence an IRQ13 interrupt, checking the Weitek coprocessor's Accumulated Exception byte. After resolving Weitek coprocessor exceptions (if present), the application program's interrupt handling routine for INT 75h should clear the coprocessor's Accumulated Exception byte and chain to the previously existing INT 75h vector. The previous INT 75h service routine will presumably clear the secondary interrupt controller and invoke the NMI handler for compatibility with 8088/8086 CPU software and possible Intel 80387 coprocessor exceptions. If any Weitek coprocessor exceptions are enabled, IRQ13 interrupts should be handled in this manner or system error messages could result.

With the benefit of this disclosure, it will be appreciated by those of ordinary skill that this invention is believed to be capable of application in other situations. For example, the invention could be implemented using the 386 virtual mode in connection with other processes designed to run on and constrained by the addressing scheme of an 8086 or 8088 CPU, such as programs executing under the well-known CP/M 86 operating system by Digital Research Inc., instead of under MS-DOS.

Accordingly, this description is to be construed as illustrative only and as for the purpose of teaching those skilled in the art the manner of carrying out the invention. Various modifications and changes may be made without departing from the spirit and scope of the invention as set forth below in the claims. It is intended that the following claims be interpreted to embrace all such modifications and changes.

a memory-mapped peripheral device residing at a physical address range outside the addressing capability of said process; and

means for mapping the resident address range of said peripheral device into an address range addressable by said process.

Claims

1. A data processing system comprising:
addressable memory;
a central processor executing a process capable of generating addresses to address some but not all of said addressable memory;

MEMORY-
MAPPED
PERIPHERAL

ADDRESSABLE
MEMORY

——— (—)

——— (—)

——————— C000EFFFh (—)———

——————— C0000000h (—)———

——————— 100EFFFh

——————— 100000h

*Fig.1*

| MEMORY<br>MAPPING<br>MEANS | ←——→ | PROCESSOR<br>EXECUTING<br>LIMITED-MEMORY<br>PROCESS |

PROCESS
ACCESS
TO MAPPED
MEMORY
AREA

EP 0 307 649 A2

REAL MODE STACK

| | |
|---|---|
| REAL MODE FLAGS BEFORE INTERRUPT | +4 |
| REAL MODE CS BEFORE INTERRUPT | +2 |
| REAL MODE IP BEFORE INTERRUPT | +0 |

◄── REAL MODE SS:SP POINTED TO HERE BEFORE THE INTERRUPT.

◄── REAL MODE SS:SP AT BEGIN OF INTERRUPT HANDLER EXECUTION.

*Fig.2*

PROTECTED MODE STACK

| HIWORD | LOWORD | OFFSET |
|---|---|---|
| ???? | VIRTUAL MODE GS | +32 (DECIMAL) |
| ???? | VIRTUAL MODE FS | +28 |
| ???? | VIRTUAL MODE DS | +24 |
| ???? | VIRTUAL MODE ES | +20 |
| ???? | VIRTUAL MODE SS | +16 |
| VIRTUAL MODE ESP | | +12 |
| VIRTUAL MODE EFLAGS | | +08 |
| ???? | CS OF VIRTUAL MODE TASK INTERRUPTED | +04 |
| EIP OF VIRTUAL MODE TASK INTERRUPTED | | +00 |

TOP OF RING 0 STACK

◄── PROTECTED MODE SS:ESP POINTS AT BEGIN OF INTERRUPT HANDLER EXECUTION.

*Fig.3*

## PROTECTED MODE STACK (RING O STACK)

| HIWORD | LOWORD | OFFSET |
|---|---|---|
| ???? | VIRTUAL MODE GS | +32 (DECIMAL) |
| ???? | VIRTUAL MODE FS | +28 |
| ???? | VIRTUAL MODE DS | +24 |
| ???? | VIRTUAL MODE ES | +20 |
| ???? | VIRTUAL MODE SS | +16 |
| NEW VIRTUAL MODE ESP (OLD ESP -6) | | +12 |
| EFLAGS (IF AND TF CLEARED) | | +08 |
| ???? | CS OF VIRTUAL MODE INTERRUPT HANDLER | +04 |
| EIP OF VIRTUAL MODE INTERRUPT HANDLER | | +00 |

◄── PROTECTED MODE SS:ESP POINTS TO HERE.

## VIRTUAL MODE STACK

| | |
|---|---|
| VIRTUAL MODE FLAGS BEFORE INTERRUPT | +4 |
| VIRTUAL MODE CS BEFORE INTERRUPT | +2 |
| VIRTUAL MODE IP BEFORE INTERRUPT | +0 |

◄── VIRTUAL MODE SS:ESP POINTED TO HERE BEFORE INTERRUPT.

◄── VIRTUAL MODE SS:ESP IN RING O STACK POINTS TO HERE.

Fig.4